# EUROPÄISCHE PATENTSCHRIFT

(11) **EP 3 131 780 B1**
(45) Veröffentlichungstag und Bekanntmachung des Hinweises auf die Patenterteilung: **08.05.2024**
(21) Anmeldenummer: 15722037.7
(22) Anmeldetag: 27.03.2015
(51) Int. Cl.: B60L 53/12, B60L 53/39, B60L 3/00, B60L 3/04, H02J 50/10

(54) **LADEANORDNUNG ZUR INDUKTIVEN BELADUNG DES ENERGIESPEICHERS EINES FAHRZEUGS UND VERFAHREN ZUM BETREIBEN EINER LADEANORDNUNG**
CHARGING ARRANGEMENT FOR INDUCTIVELY CHARGING THE ENERGY STORE OF A VEHICLE, AND METHOD FOR OPERATING A CHARGING ARRANGEMENT
SYSTÈME DE CHARGE PAR INDUCTION DE L'ACCUMULATEUR D'ÉNERGIE D'UN VÉHICULE ET PROCÉDÉ POUR FAIRE FONCTIONNER CE SYSTÈME

(30) Priorität: 16.04.2014 DE 102014005531
(43) Veröffentlichungstag der Anmeldung: 22.02.2017
(73) Patentinhaber: SEW-EURODRIVE GmbH & Co. KG, 76646 Bruchsal (DE)
(72) Erfinder: SIMON, Olaf, 76646 Bruchsal (DE); EGGER, Björn, 76646 Bruchsal (DE); SCHILLING, Rainer, 76703 Kraichtal (DE); HUA, Zhidong, D-76646 Bruchsal (DE)
(86) Internationale Anmeldenummer: PCT/EP2015/000660
(87) Internationale Veröffentlichungsnummer: WO 2015/158414

(56) Entgegenhaltungen:
- EP-A2- 2 353 924
- WO-A1-2014/034966
- WO-A2-2013/176752
- DE-A1-102010 027 640
- DE-A1-102011 015 980
- DE-T5-112008 000 980
- US-A1- 2013 009 475

## Beschreibung

Die Erfindung betrifft eine Ladeanordnung zur induktiven Beladung des Energiespeichers eines Fahrzeugs und ein Verfahren zum Betreiben einer Ladeanordnung.

Es ist allgemein bekannt, dass bei einer von einer Steuerung auf einem einzigen Abschaltpfad vorgegebenen Abschaltung einer elektronischen Vorrichtung Fehler auftreten können, wie beispielsweise Durchbrennen oder Durchgalvanisieren von Bauelementen im Brandfall oder dergleichen.

**Aus der** DE 11 2008 000 980 T5 **ist ein elektrisch angetriebener mobiler Körper und ein Boostaufladeverfahren hierfür bekannt.**

**Aus der** WO 2014 / 034966 A1 **ist eine induktive Leistungsübertragung bekannt.**

**Aus der** DE 10 2010 027 640 A1 **ist ein Elektrobeladungssystem bekannt**

**Aus der** WO 2013/176752 A2 **ist ein kabelloses Leistungsversorgungssystem bekannt.**

**Aus der** EP 2 353 924 A2 **ist ein Verfahren zum Laden von Elektrofahrzeugen bekannt.**

**Aus der** DE 10 2011 015 980 A1 **ist ein System zur induktiven Übertragung von elektrischer Energie an ein Fahrzeug bekannt.**

**Aus der** US 2013/0009475 A1 **ist eine berührungslose Energieversorgungsanordnung bekannt.**

Der Erfindung liegt daher die Aufgabe zugrunde, die Sicherheit zu verbessern.

Erfindungsgemäß wird die Aufgabe bei der Ladeanordnung zur induktiven Beladung des Energiespeichers eines Fahrzeugs nach den in Anspruch 1 und bei dem Verfahren zum Betreiben einer Ladeanordnung nach den in Anspruch 4 angegebenen Merkmalen gelöst.

Wichtige Merkmale der Erfindung bei der Ladeanordnung zur induktiven Beladung des Energiespeichers eines Fahrzeugs sind, dass eine Primärwicklung von einem Wechselrichter speisbar ist, dessen Ansteuersignale von einer Signalelektronik erzeugt werden und der aus einer von einem Schaltnetzteil bereit gestellten Versorgungsspannung versorgbar ist,

insbesondere wobei die Versorgungsspannung eine unipolare Spannung, insbesondere Gleichspannung, ist,
**wobei** die Versorgungsspannung von einem Erfassungsmodul abschaltbar ist oder zumindest ein Abschalten der Versorgungsspannung bewirkbar ist,
wobei das Erfassungsmodul mit einem Mittel zur Erfassung des in die Primärwicklung eingeprägten Stromes verbunden ist und/oder mit einem Mittel zur Erfassung des von der Primärwicklung erzeugten Magnetfelds.

Von Vorteil ist dabei, dass ein sicheres Abschalten erreichbar ist. Denn die Signalelektronik unterbricht zum Abschalten des Wechselrichters einerseits die Zuführung der Ansteuersignale und andererseits ist hiervon unabhängig die Versorgungsspannung des Wechselrichters unterbrechbar. Da somit zwei Abschaltpfade für den Wechselrichter und somit die Primärwicklung zur Verfügung stehen, ist eine erhöhte Sicherheit beim Betrieb erreichbar.

Bei einer vorteilhaften Ausgestaltung ist die Zuführung der Ansteuersignale von einem Mittel zur Bestimmung und Überwachung der Ausgangsleistung unterbrechbar,

insbesondere, wenn die von dem Mittel bestimmte Ausgangsleistung des Wechselrichters, insbesondere also das Produkt aus der Ausgangsspannung des Wechselrichters und dem in die Primärwicklung eingeprägten Strom, einen kritischen Wert unterschreitet,

insbesondere und wenn ein Abschaltsignal für die Bestromung vorgesehen ist. Von Vorteil ist dabei, dass anhand der Ausgangsleistung erkennbar ist, ob eine induktive Beladung eines Fahrzeugs ausgeführt wird oder nicht. Denn wenn Leistung induktiv übertragen wird, ist dies erkennbar an dem bestimmten Wert der Ausgangsleistung des Wechselrichters.

Bei einer vorteilhaften Ausgestaltung weist eine Signalelektronik das Mittel zur Bestimmung und Überwachung der Ausgangsleistung umfasst und/oder auf. Von Vorteil ist dabei, dass die Ausgangsleistung bestimmt wird und der bestimmte Wert verglichen wird mit einem vorgegebenen Schwellwert. Bei Unterschreiten dieses Schwellwertes wird davon ausgegangen, dass kein beladbares Fahrzeug im Bereich der induktiven Kopplung zwischen der Primärwicklung und der Sekundärwicklung des Fahrzeugs vorhanden ist.

Bei einer vorteilhaften Ausgestaltung ist die Signalelektronik mittels eines Modems mit einem Nahfeldkopplungsmittel verbunden, welches zum Datenaustausch mit einem entsprechenden Nahfeldkopplungsmittels des Fahrzeugs vorgesehen ist,

insbesondere wobei das mit dem Modem verbundene Nahfeldkopplungsmittel in von der Primärwicklung umwickelten Fläche angeordnet ist. Von Vorteil ist dabei, dass ein Datensignalaustausch zwischen stationärem Teil und Fahrzeug ausführbar ist. Dabei ist dieser Datensignalaustausch sogar im Bereich der induktiven Kopplung zwischen Primärwicklung und Sekundärwicklung, also im Bereich eines starken Wechselmagnetfeldes, ausführbar. Denn in die Primärwicklung wird ein mittelfrequenter Strom eingeprägt. Dabei ist eine Frequenz zwischen 10 und 1000 kHz bevorzugt. In der Wicklung des Nahfeldkopplungsmittels wird trotz des starken Stromes und somit trotz des starken Magnetfelds keine Gesamtspannung induziert. Dies wird dadurch erreichbar, dass die Wicklung zwei Teilwicklungen aufweist, so dass in der ersten Teilwicklung eine Spannung induziert wird, die betragsgleich aber mit umgekehrtem Vorzeichen auftritt im Vergleich zu der in der anderen Teilwicklung der Wicklung induzierten Spannung.

Bei einer vorteilhaften Ausgestaltung ist zur Unterbrechung der Versorgungsspannung das Schaltnetzteil abschaltbar ausgeführt. Von Vorteil ist dabei, dass die Versorgungsspannung in einfacher Weise abschaltbar ist.

Bei einer vorteilhaften Ausgestaltung ist das Modem mit dem Mittel zur Bestimmung und Überwachung der Ausgangsleistung verbunden. Von Vorteil ist dabei, dass durch die Signalübertragung übermittelbar ist, ob ein beladbares Fahrzeug im induktiven Kopplungsbereich vorhanden ist oder nicht. Beispielsweise ist ein Fahrzeug auch dann nicht beladbar, wenn der Energiespeicher schon aufgeladen ist. Wenn also die Information über ein nicht beladbares Fahrzeug im induktiven Kopplungsbereich vorhanden ist und trotzdem eine unzulässig hohe Ausgangsleistung erkannt wird, wird die Zuführung von Ansteuerpulsen für die Leistungshalbleiterschalter der Endstufe unterbrochen. Auf diese Weise ist also eine erhöhte Sicherheit erreichbar.

Bei einer vorteilhaften Ausgestaltung weist das Nahfeldkopplungsmittel zwei Teilwicklungen auf, die einen derartigen Wicklungssinn, eine derartige umwickelte Fläche und Windungszahl aufweisen, dass die vom von der Primärwicklung erzeugten Magnetfeld in den Teilwicklungen induzierte Spannungen betragsgleich aber unterschiedliches Vorzeichen aufweisen. Von Vorteil ist dabei, dass im starken Hintergrundwechselfeld eine Datenübertragung ermöglicht ist, wobei die von dem Hintergrundwechselfeld induzierten Spannungen in der Wicklung des Nahfeldkopplungsmittels keine Störung der Datenübertragung zwischen stationärem Teil und Fahrzeugteil bewirken.

Bei einer vorteilhaften Ausgestaltung fungiert das Nahfeldkopplungsmittel als Mittel zur Erfassung des in die Primärwicklung eingeprägten Stromes und/oder mit einem Mittel zur Erfassung des von der Primärwicklung erzeugten Magnetfelds,
wobei die in einer der Teilwicklungen induzierte Spannung als zu erfassende Messgröße verwendet ist oder der der Summe der Beträge der beiden in den Teilwicklungen induzierten Spannungen entsprechende Wert als zu erfassende Messgröße verwendet ist. Von Vorteil ist dabei, dass eine weitere unabhängige Prüfung ermöglicht ist, ob die Primärwicklung bestromt wird oder ob ein Wechselmagnetfeld von der Primärwicklung erzeugt wird.

Bei einer vorteilhaften Ausgestaltung weist der Wechselrichter aus der Versorgungsspannung gespeiste Halbbrücken aus Leistungshalbleiterschaltern auf, denen die Ansteuersignale von der Signalelektronik zugeführt werden. Von Vorteil ist dabei, dass der Wechselrichter die vorgesehenen pulsweitenmodulierten Ausgangsspannungsverläufe nur erzeugt, wenn die Versorgungsspannung vorhanden ist und die Ansteuersignale zugeleitet werden.

Wichtige Merkmale bei dem Verfahren zum Betreiben einer Ladeanordnung sind, dass es zur induktiven Beladung des Energiespeichers eines Fahrzeugs vorgesehen ist,
wobei eine Primärwicklung von einem Wechselrichter speisbar ist, dessen Ansteuersignale von einer Signalelektronik erzeugt werden und der aus einer Versorgungsspannung versorgbar ist,
insbesondere wobei die Versorgungsspannung eine unipolare Spannung, insbesondere Gleichspannung, ist,
**wobei** die Versorgungsspannung von einem Erfassungsmodul abgeschaltet wird oder zumindest ein Abschalten der Versorgungsspannung bewirkt wird, wenn kein beladbares Fahrzeug erkannt wird, insbesondere entweder mittels Erfassen des in die Primärwicklung eingeprägten Stromes und/oder mittels Erfassen des von der Primärwicklung erzeugten Magnetfelds und/oder mittels Datenaustausch mit einer auf dem Fahrzeug angeordneten elektronischen Schaltung,
wobei die Ausgangsleistung des Wechselrichters, insbesondere also das vorzugsweise zeitlich gemittelte Produkt aus der Ausgangsspannung des Wechselrichters und dem in die Primärwicklung eingeprägten Strom, bestimmt wird und die Zuführung der Ansteuersignale unterbrochen wird, wenn die bestimmte Leistung einen kritischen Wert unterschreitet,
insbesondere und wenn ein Abschaltsignal für die Bestromung vorgesehen ist.

Von Vorteil ist dabei, dass zwei Abschaltpfade realisiert sind. Somit ist die Sicherheit erhöht, da die Bestromung der Primärwicklung auf zwei unterschiedliche Arten unterbrechbar ist, nämlich einerseits durch Abschalten der Versorgungsspannung und andererseits durch Unterbrechen der Zufuhr der Ansteuersignale. Außerdem ist die Sicherheit erhöht, indem die Bestromung der Primärwicklung unabhängig überwachbar ist. Hierzu wird das durch Bestromung der Primärwicklung erzeugte Magnetfeld mittels einer Sensorspule überwacht und/oder die Bestromung der Primärwicklung mittels eines Stromsensors, der galvanisch entkoppelt vorsehbar ist von der Primärwicklung selbst.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine nicht erfindungsgemäße Ladeanordnung zur induktiven Beladung eines Fahrzeugs gezeigt.
In der Figur 2 ist die erfindungsgemäße Ladeanordnung zur induktiven Beladung eines Fahrzeugs gezeigt, wobei im Gegensatz zu Figur 1 Funktionen integriert ausgeführt sind.

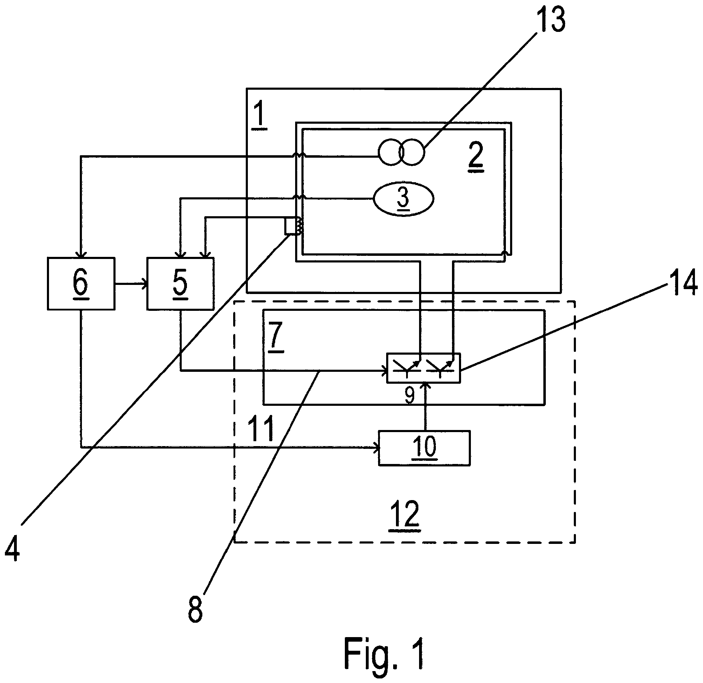

Wie in Figur 1 ausgeführt, ist am Boden ein Aufnahmeteil 1 angeordnet. Eine Primärwicklung 2 ist im Aufnahmeteil 1 aufgenommen und mittels Vergussmasse verbunden. Das Aufnahmeteil 1 ist unterhalb eines Fahrzeugs angeordnet, das an seiner Unterseite eine Sekundärwicklung aufweist, welche induktiv koppelbar ist mit der Primärwicklung 2. Somit ist Energie induktiv übertragbar ans Fahrzeug und auf diese Weise ein Energiespeicher des Fahrzeugs beladbar.

Eine Endstufe 14, welche von einer Leistungselektronik 7 umfasst ist, erzeugt eine Wechselspannung, welche die Primärwicklung 2 speist. Dabei weist die Endstufe 14 in Halbbrücken angeordnete steuerbare Leistungsschalter auf, die aus einer Versorgungsspannung gespeist werden und mittels Ansteuersignalen 9 angesteuert werden. Solange ein von einem Erfassungsmodul erzeugtes Freigabe-Signal 8 anliegt, wird die Versorgungsspannung von einem Schaltnetzteil bereitgestellt. Wenn jedoch ein Abschalten ausgeführt werden soll, also das Freigabe-Signal 8 weggenommen ist, wird die Versorgungsspannung abgeschaltet und somit die Primärwicklung nicht mehr gespeist.

Die Ansteuersignale der Leistungsschalter der Endstufe 14 werden von einer Signalelektronik des Einspeisestellers 12 erzeugt, welche ein Mittel 10 zur Bestimmung und Überwachung der Ausgangsleistung der Endstufe 14 aufweist. Dabei wird von diesem Mittel 10 die an der Primärwicklung 2 anliegende Spannung und der in sie eingeprägte Strom erfasst und daraus die Leistung bestimmt. Wenn die Leistung unter einem kritischen Wert liegt, wird ein Signal erzeugt, welches signalisiert, dass im Beriech der induktiven Kopplung kein Fahrzeug vorhanden ist oder nur ein Fahrzeug vorhanden ist, welches nicht zur Aufnahme von Leistung bereit oder freigegeben ist, beispielsweise, weil der Energiespeicher des Fahrzeugs schon aufgeladen ist.

Die Signalelektronik ist auch über ein mittels Datenbus 11 verbundenem Modem 6 mit einem Nahfeldkopplungsmittel 13 verbunden. Dieses Nahfeldkopplungsmittel 13 ermöglicht den Datenaustausch mit dem Fahrzeug im Bereich des von der Primärwicklung 2 erzeugten starken Magnetfelds. Hierzu weist das Nahfeldkopplungsmittel 13 zwei Teilwicklungen auf, deren Wicklungssinn entgegengesetzt ist und deren umwickelte Flächenzahl gleich ist, so dass die jeweils induzierten Spannungen betragsgleich aber entgegengerichtet sind. Auf diese Weise induziert das Magnetfeld der Primärwicklung keine resultierende Gesamtspannung an der Wicklung des Nahfeldkopplungsmittels 13. Am Fahrzeug ist ein baugleiches Nahfeldkopplungsmittel angeordnet, so dass eine Signalübertragung ungestört von dem starken, von der Primärwicklung 2 erzeugten Magnetfeld ausführbar ist. Auf diese Weise ist auch die Anwesenheit eines Fahrzeugs oder Beladbarkeit dessen Energiespeichers ermittelbar.

Zur Detektion des Vorhandenseins eines von der Primärwicklung 2 erzeugten Magnetfelds ist auch eine Sensorspule 3 im von der Primärwicklung 2 umwickelten Bereich angeordnet. Die von der Sensorspule 3 detektierte Signalspannung wird einem Erfassungsmodul 5 zugeführt, welches aus der detektierten Signalspannung auf das Vorhandensein eines Magnetfeldes schließt oder diese ausschließt. Falls ein Magnetfeld als vorhanden detektiert wird und kein Fahrzeug als anwesend erkannt oder zumindest als beladbar erkannt wird, insbesondere mittels Nahfeldkopplungsmittel 13, wird die Freigabe 8 der Versorgungsspannung der Endstufe 14 entzogen und somit die Endstufe 14 ohne Versorgung belassen.

Alternativ oder zusätzlich zur Sensorspule 3 ist eine Stromerfassung 4, mit welcher der in die Primärwicklung 2 eingeprägte Strom detektierbar ist, mit dem Erfassungsmodul 5 verbunden. Aus dem erfassten Strom lässt sich auf eine Bestromung der Primärwicklung 2 schließen und somit das Freigabe-Signal 8 der Versorgungsspannung der Endstufe 14 entziehen, wenn zuvor kein Fahrzeug oder zumindest kein beladbares Fahrzeug im induktiven Kopplungsbereich der Primärwicklung 2 erkannt wurde.

Auf diese Weise ist aber auch darüber hinaus der eingeprägte Strom und ein der Speisespannung der Primärwicklung entsprechender Wert erfassbar und daraus die primärseitige Ausgangsleistung bestimmbar. Unterschreitet diese Ausgangsleistung einen kritischen Wert, wird davon ausgegangen, dass kein Fahrzeug im induktiven Kopplungsbereich anwesend ist oder der Energiespeicher des Fahrzeugs nicht beladbar ist.

Die Leistungshalbleiterschalter der Endstufe 14 sind in Halbbrücken angeordnet und bilden einen Wechselrichter. Die Ansteuersignale werden von der Signalelektronik erzeugte und sind pulsweitenmoduliert. Der Wechselrichter, also die Halbbrücken, sind aus einer Zwischenkreisspannung versorgt, welche als unipolare Spannung, insbesondere Gleichspannung, ausgebildet ist und von einem Schaltnetzteil zur Verfügung gestellt wird.

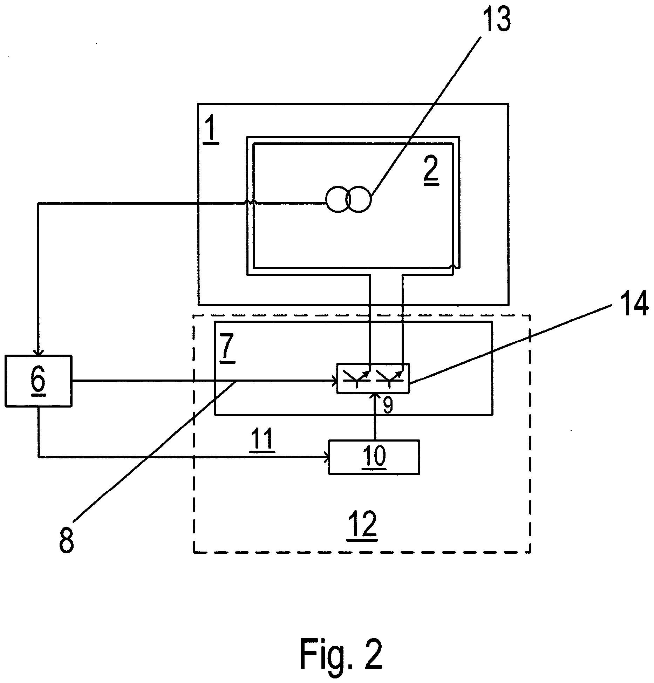

Wie in Figur 2 gezeigt, ist auch eine Integration von verschiedenen Funktionen in ein jeweiliges Mittel ausführbar. Im Unterschied zu Figur 1 ist dort nämlich die Detektion der Anwesenheit eines Fahrzeugs mit dem Nahfeldkopplungsmittel 13 ausgeführt, dessen Teilwicklungen entweder derart in Reihe geschaltet werden, dass die induzierten Spannungen sich nicht gegenseitig aufheben, sondern verstärken. Alternativ ist auch die an nur einer der Teilwicklungen induzierte Spannung bestimmbar. Aus der induzierten Spannung wird auf das Vorhandensein eines Magnetfeldes geschlossen.

Erfassungsmodul 5 und Modem 6 sind somit als integrierte Einheit ausgeführt.

### Bezugszeichenliste

1 Aufnahmeteil
2 Primärwicklung
3 Sensorspule
4 Stromsensor
5 Erfassungsmodul
6 Modem
7 Leistungselektronik
8 Freigabe der Versorgungsspannung der Endstufe 14
9 Ansteuersignale
10 Mittel zur Bestimmung und Überwachung der Ausgangsleistung
11 Datenbus
12 Einspeisesteller mit Leistungselektronik 7 und Signalelektronik
13 Nahfeldkopplungsmittel
14 Endstufe

## Patentansprüche

1. Ladeanordnung zur induktiven Beladung des Energiespeichers eines Fahrzeugs, die Ladeanordnung umfassend:
eine Primärwicklung (2), einen Wechselrichter und eine Signalelektronik, wobei die Primärwicklung (2) von dem Wechselrichter gespeist wird, dessen Ansteuersignale (9) von der Signalelektronik erzeugt werden und der aus einer von einem Schaltnetzteil bereit gestellten Versorgungsspannung versorgt wird,
wobei die Versorgungsspannung eine Gleichspannung ist;
ein Erfassungsmodul, **wobei** die Versorgungsspannung von dem Erfassungsmodul (5) abschaltbar ist oder zumindest das Erfassungsmodul zum Abschalten der Versorgungsspannung bewirkbar ist,
**wobei zur Unterbrechung der Versorgungsspannung das Schaltnetzteil abschaltbar ausgeführt ist,**
wobei das Erfassungsmodul (5) **mit einem Nahfeldkopplungsmittel (13) zur Erfassung des in die Primärwicklung (2) eingeprägten Stromes** verbunden zur Erfassung des von der Primärwicklung (2) erzeugten Magnetfelds;
ein Mittel (10) zur Bestimmung und Überwachung der Ausgangsleistung, wobei **die Zuführung der Ansteuersignale (9) von** dem **Mittel (10) unterbrechbar ist,**
**wenn die von dem Mittel (10) bestimmte Ausgangsleistung des** Wechselrichters
**einen kritischen Wert unterschreitet, und wenn ein Abschaltsignal für die Bestromung vorgesehen ist,**
wobei die Ausgangsleistung des Wechselrichters als das Produkt aus der Ausgangsspannung des Wechselrichters und dem in die Primärwicklung (2) eingeprägten Strom berechnet wird, 1f
wobei zwei Abschaltpfade realisiert sind, welche die Bestromung der Primärwicklung (2) auf zwei unterschiedliche Arten unterbrechen, nämlich einerseits durch Abschalten der Versorgungsspannung und andererseits durch Unterbrechen der Zufuhr der Ansteuersignale (9); 1f
ein Modem (6) und ein Nahfeldkopplungsmittel (13), wobei **die Signalelektronik mittels** des **Modems (6) mit dem Nahfeldkopplungsmittel (13) verbunden ist,** wobei das Modem (6) **zum Datenaustausch mit einem entsprechenden Nahfeldkopplungsmittels (13) des Fahrzeugs vorgesehen ist,**
**wobei das Erfassungsmodul (5) und Modem (6) als integrierte Einheit ausgeführt sind,**
wobei das Modem (6) mit dem Mittel (10) zur Bestimmung und Überwachung der Ausgangsleistung verbunden ist; 1f
**wobei das mit dem Modem (6) verbundene Nahfeldkopplungsmittel (13) in von der Primärwicklung (2) umwickelten Fläche angeordnet ist,**
**wobei das Nahfeldkopplungsmittel (13) zwei Teilwicklungen aufweist, die einen derartigen** Wicklungssinn und **eine derartige umwickelte Fläche und Windungszahl aufweisen, dass die vom von der Primärwicklung (2) erzeugten Magnetfeld in den Teilwicklungen induzierte Spannungen betragsgleich aber** ein **unterschiedliches Vorzeichen aufweisen,**
**wobei** das Nahfeldkopplungsmittel (13) **als Mittel zur Erfassung des in die Primärwicklung (2) eingeprägten Stromes und/oder mit einem Mittel zur Erfassung des von der Primärwicklung (2) erzeugten Magnetfelds fungiert**
**dadurch gekennzeichnet,**
- **dass die in einer der Teilwicklungen induzierte Spannung als zu erfassende Messgröße verwendet** wird, und
- **dass ein der Summe der Beträge der beiden in den Teilwicklungen induzierten Spannungen entsprechender Wert als zu erfassende Messgröße verwendet** wird,
**wobei für eine Dateübertragung zwischen dem stationären Teil und dem Fahrzeugteil die Summe der in den Teilwicklungen induzierten Spannungen erfasst wird,**
**wobei die Detektion der Anwesenheit eines Fahrzeugs mit dem Nahfeldkoppungsmittel ausgeführt wird, indem nur eine der in den Teilwicklungen induzierten Spannungen erfasst** wird.

2. Ladeanordnung **nach Anspruch 1,**
**dadurch gekennzeichnet, dass**
eine Signalelektronik das Mittel (10) zur Bestimmung und Überwachung der Ausgangsleistung umfasst und/oder aufweist.

3. 4- Ladeanordnung nach mindestens einem der vorangegangenen Ansprüche,
**dadurch gekennzeichnet, dass**
der Wechselrichter aus der Versorgungsspannung gespeiste Halbbrücken aus Leistungshalbleiterschaltern aufweist, denen die Ansteuersignale (9) von der Signalelektronik zugeführt werden.

4. Verfahren zum Betreiben einer Ladeanordnung **nach mindestens einem der vorangegangenen Ansprüche** zur induktiven Beladung des Energiespeichers eines Fahrzeugs, wobei eine Primärwicklung (2) von einem Wechselrichter gespeist wird, dessen Ansteuersignale (9) von einer Signalelektronik erzeugt werden und der aus einer Versorgungsspannung versorgt wird, wobei die Versorgungsspannung eine Gleichspannung ist, wobei die Zuführung der Ansteuersignale (9) von dem Mittel (10) unterbrechbar ist, wenn die von dem Mittel (10) bestimmte Ausgangsleistung des Wechselrichters einen kritischen Wert unterschreitet, und wenn ein Abschaltsignal für die Bestromung vorgesehen ist, wobei die Ausgangsleistung des Wechselrichters als das Produkt aus der Ausgangsspannung des Wechselrichters und dem in die Primärwicklung (2) eingeprägten Strom berechnet wird, wobei zwei Abschaltpfade realisiert sind, welche die Bestromung der Primärwicklung (2) auf zwei unterschiedliche Arten unterbrechen, nämlich einerseits durch Abschalten der Versorgungsspannung und andererseits durch Unterbrechen der Zufuhr der Ansteuersignale (9);
**dadurch gekennzeichnet,**
- **dass** die in einer der Teilwicklungen induzierte Spannung als zu erfassende Messgröße verwendet wird, und
- **dass** ein der Summe der Beträge der beiden in den Teilwicklungen induzierten Spannungen entsprechender Wert als zu erfassende Messgröße verwendet wird, 1f
wobei für eine Datenübertragung zwischen dem stationären Teil und dem Fahrzeugteil die Summe der in den Teilwicklungen induzierten Spannungen erfasst wird, wobei die Detektion der Anwesenheit eines Fahrzeugs mit dem Nahfeldkopplungsmittel ausgeführt wird, indem nur eine der in den Teilwicklungen induzierten Spannungen erfasst wird.

## Claims

1. Charging assembly for inductively charging the energy storage device of a vehicle, the charging assembly comprising:
a primary winding (2), an inverter and signal electronics, wherein the primary winding (2) is fed by the inverter, the actuation signals (9) of which are generated by the signal electronics and which is powered from a supply voltage provided by a switched-mode power supply,
wherein the supply voltage is a DC voltage;
a detection module, wherein the supply voltage can be shut down by the detection module (5), or the detection module at least can be induced to shut down the supply voltage, wherein the switched-mode power supply is configured so as to be able to be shut down in order to interrupt the supply voltage,
wherein the detection module (5) is connected to a near-field coupling means (13) for detecting the current impressed on the primary winding (2), in order to detect the magnetic field generated by the primary winding (2);
a means (10) for determining and monitoring the output power, wherein the supply of the actuation signals (9) can be interrupted by the means (10) when the output power of the inverter, as determined by the means (10), drops below a critical value and when a shutdown signal for the current feed is provided,
wherein the output power of the inverter is calculated as the product of the output voltage of the inverter and the current impressed on the primary winding (2), wherein two shutdown paths are implemented, which interrupt the current feed of the primary winding (2) in two different ways, namely on the one hand by shutting down the supply voltage and on the other hand by interrupting the supply of the actuation signals (9);
a modem (6) and a near-field coupling means (13), wherein the signal electronics are connected to the near-field coupling means (13) by means of the modem (6), wherein the modem (6) is provided for exchanging data with a corresponding near-field coupling means (13) of the vehicle,
wherein the detection module (5) and modem (6) are configured as an integrated unit,
wherein the modem (6) is connected to the means (10) for determining and monitoring the output power,
wherein the near-field coupling means (13) connected to the modem (6) is arranged in an area around which the primary winding (2) is wound,
wherein the near-field coupling means (13) has two part-windings which have such a winding direction and such an encircled area and number of turns that the voltages induced in the part-windings by the magnetic field generated by the primary winding (2) are identical in magnitude but have a different sign,
wherein the near-field coupling means (13) functions as the means for detecting the current impressed on the primary winding (2) and/or together with a means for detecting the magnetic field generated by the primary winding (2),
**characterised in that**
- the voltage induced in one of the part-windings is used as the measured variable to be detected, and **in that**
- a value corresponding to the sum of the magnitudes of the two voltages induced in the part-windings is used as the measured variable to be detected,
wherein for the purpose of data exchange between the stationary part and the vehicle part,
the sum of the voltages induced in the part-windings is detected, wherein the presence of a vehicle is detected using the near-field coupling means **in that** just one of the voltages induced in the part-windings is detected.

2. Charging assembly according to claim 1,
**characterised in that**
signal electronics comprise and/or have the means (10) for determining and monitoring the output power.

3. Charging assembly according to at least one of the preceding claims,
**characterised in that**
the inverter has half-bridges, fed from the supply voltage, composed of power semiconductor switches to which the actuation signals (9) are supplied by the signal electronics.

4. Method for operating a charging assembly according to at least one of the preceding claims for inductively charging the energy storage device of a vehicle,
wherein a primary winding (2) is fed by an inverter, the actuation signals (9) of which are generated by signal electronics and which is powered from a supply voltage,
wherein the supply voltage is a DC voltage,
wherein the supply of the actuation signals (9) can be interrupted by the means (10) when the output power of the inverter, as determined by the means (10), drops below a critical value and when a shutdown signal for the current feed is provided, wherein the output power of the inverter is calculated as the product of the output voltage of the inverter and the current impressed on the primary winding (2), wherein two shutdown paths are implemented, which interrupt the current feed of the primary winding (2) in two different ways, namely on the one hand by shutting down the supply voltage and on the other hand by interrupting the supply of the actuation signals (9),
**characterised in that**
- the voltage induced in one of the part-windings is used as the measured variable to be detected, and **in that**
- a value corresponding to the sum of the magnitudes of the two voltages induced in the part-windings is used as the measured variable to be detected,
wherein for the purpose of data exchange between the stationary part and the vehicle part, the sum of the voltages induced in the part-windings is detected, wherein the presence of a vehicle is detected using the near-field coupling means **in that** just one of the voltages induced in the part-windings is detected.

## Revendications

1. Agencement de chargement permettant de charger par induction l'accumulateur d'énergie d'un véhicule, l'agencement de chargement comprenant :
un enroulement primaire (2), un onduleur et une électronique de traitement de signal, l'enroulement primaire (2) étant alimenté par l'onduleur dont les signaux d'attaque (9) sont générés par l'électronique de traitement de signal et qui est alimenté par une tension d'alimentation fournie par une alimentation à découpage,
la tension d'alimentation étant une tension continue ;
un module de détection, la tension d'alimentation pouvant être coupée par le module de détection (5), ou au moins le module de détection pouvant être amené à couper la tension d'alimentation,
l'alimentation à découpage étant mise en oeuvre de manière à pouvoir être coupée afin d'interrompre la tension d'alimentation,
le module de détection (5) étant relié à un moyen de couplage de champ proche (13) afin de détecter le courant provoqué dans l'enroulement primaire (2) et de détecter le champ magnétique généré par l'enroulement primaire (2) ;
un moyen (10) permettant de déterminer et de surveiller la puissance de sortie, l'acheminement des signaux d'attaque (9) pouvant être interrompu par le moyen (10) lorsque la puissance de sortie de l'onduleur déterminée par le moyen (10) est inférieure à une valeur critique et lorsqu'un signal d'arrêt concernant l'alimentation est prévu,
la puissance de sortie de l'onduleur étant calculée comme étant le produit de la tension de sortie de l'onduleur et du courant provoqué dans l'enroulement primaire (2),
deux chemins de coupure étantt réalisés, qui interrompent l'alimentation électrique de l'enroulement primaire (2) de deux manières différentes, à savoir d'une part en coupant la tension d'alimentation et d'autre part en interrompant l'acheminement des signaux d'attaque (9) ;
un modem (6) et un moyen de couplage de champ proche (13), l'électronique de traitement de signal étant reliée au moyen de couplage de champ proche (13) grâce au modem (6), le modem (6) étant prévu pour l'échange de données avec un moyen de couplage de champ proche (13) correspondant du véhicule,
le module de détection (5) et le modem (6) étant mis en oeuvre sous la forme d'une unité intégrée,
le modem (6) étant relié au moyen (10) permettant de déterminer et de surveiller la puissance de sortie ;
le moyen de couplage de champ proche (13) relié au modem (6) étant agencé dans la surface enveloppée par l'enroulement primaire (2),
le moyen de couplage de champ proche (13) présentant deux sous-enroulements qui présentent un tel sens d'enroulement et une telle surface enveloppée et un tel nombre de spires que les tensions induites dans les sous-enroulements par le champ magnétique généré par l'enroulement primaire (2) ont la même valeur mais un signe différent,
le moyen de couplage de champ proche (13) agissant comme un moyen permettant de détecter le courant provoqué dans l'enroulement primaire (2) et/ou avec un moyen permettant de détecter le champ magnétique généré par l'enroulement primaire (2),
**caractérisé en ce que**
- la tension induite dans l'un des sous-enroulements est utilisée comme grandeur de mesure à détecter, et
**en ce que**
- une valeur correspondant à la somme des montants des deux tensions induites dans les sous-enroulements est utilisée comme grandeur de mesure à détecter,
la somme des tensions induites dans les sous-enroulements étant détectée en vue d'une transmission de données entre la partie fixe et la partie véhicule,
la détection de la présence d'un véhicule étant effectuée grâce au moyen de couplage de champ proche en ne détectant qu'une seule des tensions induites dans les sous-enroulements.

2. Agencement de chargement selon la revendication 1,
**caractérisé en ce que**
une électronique de traitement de signal comprend et/ou présente le moyen (10) permettant de déterminer et de surveiller la puissance de sortie.

3. Agencement de chargement selon au moins l'une quelconque des revendications précédentes,
**caractérisé en ce que**
l'onduleur présente des demi-ponts alimentés par la tension d'alimentation et construits à partir de commutateurs à semi-conducteurs de puissance vers lesquels les signaux d'attaque (9) sont acheminés par l'électronique de traitement de signal.

4. Procédé de fonctionnement d'un système de chargement selon au moins l'une quelconque des revendications précédentes permettant de charger par induction l'accumulateur d'énergie d'un véhicule,
un enroulement primaire (2) étant alimenté par un onduleur dont les signaux d'attaque (9) sont générés par une électronique de traitement de signal et qui est alimenté par une tension d'alimentation,
la tension d'alimentation étant une tension continue,
l'acheminement des signaux d'attaque (9) pouvant être interrompu par le moyen (10) lorsque la puissance de sortie de l'onduleur déterminée par le moyen (10) est inférieure à une valeur critique et lorsqu'un signal de coupure concernant l'alimentation est prévu, la puissance de sortie de l'onduleur étant calculée comme étant le produit de la tension de sortie de l'onduleur et du courant provoqué dans l'enroulement primaire (2), deux chemins de coupure étant réalisés, qui interrompent l'alimentation de l'enroulement primaire (2) de deux manières différentes, à savoir d'une part en coupant la tension d'alimentation et d'autre part en interrompant l'acheminement des signaux d'attaque (9) ;
**caractérisé en ce que**
- la tension induite dans l'un des sous-enroulements est utilisée comme grandeur de mesure à détecter, et
**en ce que**
- une valeur correspondant à la somme des montants des deux tensions induites dans les sous-enroulements est utilisée comme grandeur de mesure à détecter,
la somme des tensions induites dans les sous-enroulements étant détectée en vue d'une transmission de données entre la partie fixe et la partie véhicule, la détection de la présence d'un véhicule étant effectuée grâce au moyen de couplage de champ proche en ne détectant qu'une seule des tensions induites dans les sous-enroulements.
